# EUROPÄISCHE PATENTSCHRIFT

(11) **EP 1 934 137 B1**
(45) Veröffentlichungstag und Bekanntmachung des Hinweises auf die Patenterteilung: **11.02.2009**
(21) Anmeldenummer: 06807038.2
(22) Anmeldetag: 06.10.2006
(51) Int. Cl.: C01B 17/90

(54) **VERFAHREN ZUR REGENERIERUNG VON SCHWEFELSÄURE**
PROCESS FOR THE REGENERATION OF SULFURIC ACID
PROCEDE DE REGENERATION D'ACIDE SULFURIQUE

(30) Priorität: 13.10.2005 DE 102005049084
(43) Veröffentlichungstag der Anmeldung: 25.06.2008
(73) Patentinhaber: Wacker Chemie AG, 81737 München (DE)
(72) Erfinder: KÄPPLER, Klaus, 84489 Burghausen (DE); IRETZBERGER, Reinhold, 84359 Simbach am Inn (DE); NAGY, Gerhard, A-5144 Handenberg (AT)
(74) Vertreter: Fritz, Helmut
(86) Internationale Anmeldenummer: PCT/EP2006/067136
(87) Internationale Veröffentlichungsnummer: WO 2007/042476

(56) Entgegenhaltungen:
- EP-A- 0 084 674
- EP-A1- 0 784 031
- DE-A1- 2 503 610
- DE-A1- 2 632 989

## Beschreibung

Die Erfindung betrifft ein Verfahren zur Regenerierung von Gebrauchtschwefelsäure, welche durch die Nebenbestandteile Methylschwefelsäure, Dimethylether, Methanol, aliphatische und olefinische Kohlenwasserstoffe, Chlorkohlenwasserstoffe und organische Silicium-Verbindungen verunreinigt ist.

Bei der Direktsynthese von Methylchlorsilanen wird Chlormethan eingesetzt. Das erforderliche Chlormethan wird meist aus Methanol und Chlorwasserstoff hergestellt, wobei als Nebenprodukte Wasser und in geringen Mengen Dimethylether entstehen. Das so erhaltene Chlormethan zur Herstellung von Methylchlorsilanen muss sorgfältig getrocknet und von Dimethylether befreit werden.

Der für die Herstellung von Chlormethan verwendete Chlorwasserstoff stammt zum überwiegenden Teil aus Hydrolysereaktionen von Methylchlorsilanen. Daher sind im hergestellten Chlormethan auch Nebenbestandteile der Methylchlorsilane, wie aliphatische und olefinische Kohlenwasserstoffe und Chlorkohlenwasserstoffe zu finden. Wird der Chlorwasserstoff aus Hydrolysereaktionen von Methylchlorsilanen ohne Zwischenreinigung direkt in der Chlormethanerzeugung eingesetzt, so können zusätzlich organische Silicium-Verbindungen entsprechend dem Dampfdruck in das Produkt gelangen.

Das Chlormethan kann von vorstehend genannten Verunreinigungen durch eine Wäsche mit konzentrierter Schwefelsäure befreit werden. Dabei werden Wasser, Dimethylether, Olefine und organische Silicium-Verbindungen vollständig, Chlorkohlenwasserstoffe und Kohlenwasserstoffe teilweise abgetrennt. Die verbrauchte Schwefelsäure, mit einer Konzentration von etwa 75 Gew.-% oder weniger, muss ausgeschleust werden, da ihr Absorptionsvermögen für Dimethylether erschöpft ist.

In der Patentanmeldung DE 25 03 610 A1 ist ein Verfahren zur Reinigung von mit Methylschwefelsäure verunreinigter Schwefelsäure beschrieben. Dazu wird gebrauchte, aus der Reinigung von Chlormethan stammende Schwefelsäure mit 10 bis 25 Gew.-% Wasser, bezogen auf den Schwefelsäuregehalt, verdünnt. Anschließend wird Dampf eingeleitet, wobei eine Temperatur von 170 bis 180°C erreicht wird, bei der der Anteil an Methylschwefelsäure zu Methanol und Schwefelsäure hydrolysiert und Methanol abdestilliert wird.

Das Verfahren nach DE 25 03 610 A1 ist für Schwefelsäure, die neben Methylschwefelsäure, Dimethylether und Methanol noch zusätzliche vorstehend beschriebene Verunreinigungen enthält nicht anwendbar, da es aufgrund der hohen Temperatur zu Crackprozessen kommt. Der dabei entstehende Kohlenstoff ist koksartig fest und führt zum schnellen Zuwachsen von Apparateteilen.

In der Broschüre "Schott Engineering, 1987" von Schott Engineering GmbH, Mainz, Seite 12 bis 17 ist ein Verfahren zur Konzentrierung und Reinigung von Abfallschwefelsäure beschrieben, bei dem problemspezifisch Oxidationsmittel der Abfallsäure zugegeben werden.

Die Oxidation von organischen Verunreinigungen ist bei hohen Belastungen aufwendig, da große Mengen Oxidationsmittel zugesetzt werden müssen. Die Oxidation siliciumorganischer Verbindungen führt zu kolloidal verteilter Kieselsäure. Die Filtration stellt aufgrund des aggressiven Mediums und aufgrund der geringen Partikelgröße ein größeres Problem dar. Darüber hinaus birgt der Kontakt größerer Mengen eines Oxidationsmittels mit der Dimethylether-haltigen Schwefelsäure ein erhebliches Sicherheitsrisiko in sich.

Die Zugabe von Oxidationsmitteln im Anschluss an das in DE 25 03 610 A1 beschriebene Verfahren ist auch nicht zweckmäßig, da die groben Kokspartikel, aufgrund der kleinen Oberfläche im Vergleich zu der Menge, nur schwer und langsam oxidiert werden.

Die Patentschrift EP 0 784 031 B1 beschreibt ein Verfahren, dass die vorstehenden Verunreinigungen entfernt, wobei die Schwefelsäure für die Reinigung in einem ersten Schritt mit Wasser verdünnt und mit Wasserdampf bei einer Konzentration von 45 bis maximal 55 Gew.-% gestrippt wird, in einem zweiten Reinigungsschritt durch Zugabe eines Oxidationsmittels bei 80-130°C behandelt wird und anschließend auf mindestens 90 Gew.-% aufkonzentriert wird, um sie wieder für die Chlormethanreinigung einzusetzen. Diese Methode besitzt jedoch einige Nachteile. Die aus der MeCl-Reinigung ablaufende verbrauchte Schwefelsäure enthält bereits feste Partikel aus Ruß und Koks. Diese Feststoffe werden durch die Strippung nicht abgetrennt. Die Oxidation der Feststoffe in der etwa 50%igen Schwefelsäure läuft nur unvollständig ab. Die Feststoffe konzentrieren sich mit der Zeit auf, so dass stets eine geregelte Zufuhr von Frischschwefelsäure notwendig ist. Weiterhin besteht ein relativ hoher Verbrauch an Oxidationsmitteln, da bei den hohen Temperaturen eine vermehrte Eigenzersetzung des Oxidationsmittels auftritt und dieses somit nicht für die Oxidation zur Verfügung steht.

Aufgabe war es daher, ein verbessertes Verfahren zur Regenerierung von Gebrauchtschwefelsäure bereitzustellen, bei dem die vorstehend erwähnten Nebenbestandteile effektiver entfernt werden, und weniger Rohstoffe verbraucht werden.

Diese Aufgabe wurde gelöst durch ein Verfahren zur Regenerierung von Gebrauchtschwefelsäure, die durch Nebenbestandteile aus der Gruppe enthaltend Methylschwefelsäure, Dimethylether, Methanol, aliphatische und olefinische Kohlenwasserstoffe, Chlorkohlenwasserstoffe und organische Silicium-Verbindungen verunreinigt ist, bei dem die Gebrauchtschwefelsäure
1. durch Zugabe von flüssigem Wasser und Einleiten von Wasserdampf auf eine Konzentration von höchstens 55 Gew.-% an Schwefelsäure verdünnt und auf höchstens 135°C zum Sieden erhitzt und
2. bei vermindertem Druck und bei einer Temperatur von mindestens 170°C auf mindestens 80 Gew.-% aufkonzentriert und danach mit einem Oxidationsmittel umgesetzt wird.

Das erfindungsgemäße Verfahren hat den Vorteil, dass ein geschlossener und somit autarker Schwefelsäurekreislauf für die Chlormethanreinigung möglich ist. Frischschwefelsäure wird nicht mehr benötigt und somit entfallen auch die Gefahrguttransporte für Frischschwefelsäure. Weiterhin wird im erfindungsgemäßen Verfahren wesentlich weniger Oxidationsmittel verbraucht. Zudem hat dieses neue Verfahren auch sicherheitstechnische Vorteile, da die Oxidation bei tieferen Temperaturen durchgeführt wird und somit leichter steuerbar ist.

Im ersten Reinigungsschritt wird die verbrauchte Schwefelsäure bevorzugt mit flüssigem Wasser bei Umgebungstemperatur auf eine Konzentration verdünnt, deren Siedetemperatur bei 0,1 MPa höchstens 135°C, insbesondere höchstens 130°C ist und anschließend wird mit Wasserdampf behandelt.

Die freigesetzte Verdünnungswärme und der eingeblasene Wasserdampf erhitzen die Säure auf Siedetemperatur. 130°C entsprechen dem Siedepunkt einer 55 Gew.-%igen Schwefelsäure bei 0,1 MPa.

Durch die Verdünnung mit flüssigem Wasser werden die absorbierten organischen Verbindungen aus der Gebrauchtschwefelsäure freigesetzt und können anschließend mit Wasserdampf ausgestrippt werden.

Die Gebrauchtschwefelsäure wird vorzugsweise im ersten Schritt nicht unter 45 Gew.-% an Schwefelsäure verdünnt, da bei einer späteren Aufkonzentration sonst zu viel Wasser entfernt werden muss.

Der Wasserdampf bewirkt nach dem Prinzip der Wasserdampfdestillation eine Herabsetzung des Dampfdruckes der Nebenbestandteile, die mit dem Wasserdampf aus der Säure ausgetragen werden und dann einer geordneten Entsorgung zugeführt werden können. Bei der Behandlung mit Wasserdampf kann auch unter vermindertem Druck gearbeitet werden.

Bevorzugt eingesetzt wird Dampf mit einer Temperatur von 120 bis 140°C. Bei Temperaturen über 135°C tritt die Verkokung der Nebenbestandteile so schnell ein, dass es zu unkontrollierten Koksabscheidungen kommt.

Die eingesetzte Dampfmenge beträgt vorzugsweise 10 bis 200 Gew.-%, insbesondere 20 bis 60 Gew.-%, bezogen auf die Menge an Schwefelsäure in der Gebrauchtschwefelsäure.

Durch das Einleiten von Wasserdampf in die siedende verdünnte Schwefelsäure werden flüchtige Verbindungen, Nebenbestandteile, wie Methanol, aliphatische und olefinische Kohlenwasserstoffe, Chlorkohlenwasserstoffe und flüchtige organische Silicium-Verbindungen zumindest teilweise entfernt. Bei den gegebenenfalls chlorierten Kohlenwasserstoffen handelt es sich hauptsächlich um Alkane und Olefine mit 6 bis 7 Kohlenstoffatomen. Bei den flüchtigen organischen Silicium-Verbindungen handelt es sich hauptsächlich um Cyclodimethylsiloxane, beispielsweise Hexamethylcyclotrisiloxan, Octamethylcyclotetrasiloxan, Dekamethylcyclopentasiloxan und Dodekamethylcyclohexasiloxan und lineare Siloxane mit verschiedenen Endgruppen wie beispielsweise OH, Cl und OSO₃H.

Als Maß für die organische Belastung der Gebrauchtschwefelsäure kann der CSB-Wert, der Chemische Sauerstoffbedarf, das heißt der Verbrauch an Sauerstoff zur vollständigen Oxidation in mg/l, betrachtet werden, welcher nach der Vorschrift DIN 38409 bestimmt wird. Die aus dem Chlormethan-Waschprozess stammende Gebrauchtschwefelsäure hat einen CSB von üblicherweise mindestens 100.000 mg/l. Die Säure weist nach dem ersten Reinigungsschritt nur mehr einen CSB von höchstens 10000 mg/l auf, ist aber meistens noch schwarz-braun gefärbt. Diese Methode ist relativ störanfällig. Daher besteht auch die Möglichkeit die Belastung der Gebrauchtschwefelsäure anhand der Farbe oder des Feststoffgehaltes zu bestimmen. Dies erfolgt durch Filtration und anschließendes Auswiegen.

Wird die Gebrauchtschwefelsäure nicht genügend verdünnt, können die Nebenbestandteile nur ungenügend ausgetragen werden, da deren Wechselwirkungsenergie mit der Schwefelsäure noch zu hoch ist. Folge davon ist ein erhöhter Oxidationsmittelverbrauch im nachfolgenden Schritt.

In einem zweiten Reinigungsschritt wird nun die aus dem ersten Schritt erhaltene Schwefelsäure auf eine Konzentration gebracht, bei der ein erneuter Einsatz in der Chlormethanreinigung möglich ist. Bevorzugt beträgt sie mindestens 80 Gew.-%. Besonders bevorzugt wird die Schwefelsäure auf 85 bis 95 Gew.-% aufkonzentriert. Die restliche Belastung an oxidierbaren Anteilen wird durch Zugabe geringer Mengen an Oxidationsmitteln entfernt. Bevorzugt wird nur ein Teilstrom von 10 bis 50% der aufkonzentrierten Schwefelsäure der Oxidation unterzogen.

Als Oxidationsmittel werden bevorzugt Salpetersäure, Ozon, Chlor, Chlordioxid oder Wasserstoffperoxid eingesetzt. Bei Einsatz von Ozon kann mit UV-Licht die Oxidationsgeschwindigkeit erhöht werden. Besonders bevorzugt eingesetzt wird Wasserstoffperoxid. Bevorzugt als 20 bis 50 Gew.-%ige, insbesondere 30 bis 35 Gew.-%ige Lösung in Wasser.

Geeignete Verfahren zum Konzentrieren von verdünnten Schwefelsäuren sind beispielsweise in "Ullmanns Enzyklopädie der technischen Chemie", 4. Auflage, Bd 21, S. 117ff, Verlag Chemie, Weinheim (1982) beschrieben.

Die Oxidation erfolgt bevorzugt bei 40 bis 90°C. Besonders bevorzugt bei 40 bis 70°C, und Drücken von 0,03 bis 0,3 MPa, bevorzugt 0,09 bis 0,2 MPa. Die Menge des zugegebenen Oxidationsmittels wird aufgrund des ermittelten CSB-Wertes, der Farbe der Schwefelsäure oder des Feststoffgehaltes berechnet. Es wird mindestens die stöchiometrische Menge Oxidationsmittel zugegeben. Vorzugsweise wird höchstens ein zweifacher Überschuss bezogen auf den CSB an Oxidationsmittel eingesetzt. Ein Überschuss an Oxidationsmittel wird dann zugegeben, wenn das Oxidationsmittel zu thermischer und/oder katalytischer Eigenzersetzung neigt. So zersetzt sich Wasserstoffperoxid thermisch zu Wasser und Sauerstoff. Schwermetallionen, die als Verunreinigungen in der Säure vorhanden sein können, katalysieren diese Eigenzersetzung.

Bevorzugt erfolgt die Oxidation in einem Teilstrom der etwa 90%-igen Säure und wird anschließend mit der verdünnten Schwefelsäure aus Schritt 1 gemischt und geht zurück in die Aufkonzentrierung.

Die Reaktionszeit des zweiten Schritts beträgt vorzugsweise mindestens 15 Minuten, insbesondere mindestens 30 Minuten.

Nach dem zweiten Reinigungsschritt resultiert eine farblose, bis schwach hellbraune Schwefelsäure, in der keine Kohlenwasserstoffe mehr nachweisbar sind. Bevorzugt wird die Hauptmenge der im zweiten Schritt aufkonzentrierten und durch Zugabe eines Oxidationsmittels behandelten Schwefelsäure wieder den Schwefelsäurewäschern der Methylchlorid-Reinigung zugeführt. Somit ergibt sich ein geschlossener Schwefelsäurekreislauf.

Alle Einzelschritte können auch im Batchbetrieb ausgeführt werden. Bevorzugt laufen die Aufarbeitungsschritte jedoch kontinuierlich ab.

### Beispiele

In den folgenden Beispielen wird eine Gebraucht-Schwefelsäure mit folgender Zusammensetzung eingesetzt:
Die Schwefelssäure hat eine Konzentration von etwa 76 Gew.-%, ist tief schwarz gefärbt und enthält ungelöste rußartige Crackprodukte mit einer Feststofffracht von etwa 250 mg/l. Die Bestimmung der Feststofffracht in der Gebraucht-Schwefelsäure erfolgte durch Filtration über ein Glasfaser-Rundfilter (GF 6) und Auswaage des getrockneten Filterrückstandes.
CSB Bestimmung nach DIN 38409 ergab: >200.000 mg/l Schwefelsäure 76 Gew.-%; Wasser 16 Gew.-%; Dimethylether 5,5 Gew.-%; Monomethylsulfat 1,8 Gew.-%; Chlormethan 0,2 Gew.-%; Methanol 0,2 Gew.-% Summe C4-C8 Kohlenwasserstoffe 0,1 Gew.-%; Siloxane 0,2 Gew.-%. Diese Werte wurden über ¹H-NMR bestimmt.

### Beispiel 1 (analog EP 0784 031 B1; nicht erfindungsgemäß)

### Schritt 1:

Die ca. 76%ige Gebrauchtschwefelsäure der oben beschriebenen Zusammensetzung wird mit Wasser auf eine Konzentration von ca. 55 Gew.-% verdünnt und von oben in eine mit Glasraschigringen gefüllte Glaskolonne (Länge 1 m, Durchmesser 50 mm) mit einer Dosierrate von 1,0 1/h eingespeist. Von unten wird Wasserdampf mit einer Temperatur von etwa 130°C eingeblasen und zwar in der Menge, dass die Temperatur der ablaufenden Säure 130 °C beträgt. Die Konzentration der ablaufenden Säure beträgt ca. 50 Gew.-%. Die ablaufende Säure ist schwarz gefärbt und enthält feinteilige Crackprodukte (Feststofffracht 145 mg/l). Der CSB beträgt ca. 10.000 mg/l.

### Schritt 2:

Zur ablaufenden etwa 50%igen Säure werden etwa 100 g/l 35%ige H₂O₂-Lösung, entspricht der 1,6 fachen stöchiometrischen Menge oder auch 143 g 35%iges H₂O₂ pro kg 100%iger H₂SO₄, zudosiert und die Mischung danach 30 Minuten bei 90°C gehalten. Anschließend wird die Säure bei 50 mbar und 190°C aufkonzentriert. Es resultiert eine durch Crackprodukte (Ruß) tief schwarz gefärbte 90%ige Schwefelsäure (0,50 1/h; CSB 2000 mg/l; Feststofffracht 340 mg/l).

### Beispiel 2 (erfindungsgemäß)

### Schritt 1:

### Analog Beispiel 1

### Schritt 2:

Die durch Strippen mit Wasserdampf vorgereinigte etwa 50%ige Säure aus Schritt 1 ( Feststofffracht 145 mg/l) wird bei 50 mbar und 190°C auf etwa 90 Gew.-% aufkonzentriert (CSB 2000 mg/l; Feststofffracht 340 mg/l).

Zu einer Teilmenge von 50%, also der Hälfte, der aufkonzentrierten Säure wird etwa 15 g/l.35%ige H₂O₂-Lösung, entspricht 9 g 35%iges H₂O₂ pro kg 100%iger H₂SO₄, so zudosiert, dass die Mischtemperatur nicht über 65°C steigt. Die Mischung wird für 30 min bei etwa 65°C gehalten. Danach ist die Mischung schwach hellbraun gefärbt aber klar und durchscheinend (CSB < 500 mg/l; Feststofffracht 100 mg/l).

## Patentansprüche

1. Verfahren zur Regenerierung von Gebrauchtschwefelsäure, die durch Nebenbestandteile aus der Gruppe enthaltend Methylschwefelsäure, Dimethylether, Methanol, aliphatische und olefinische Kohlenwasserstoffe, Chlorkohlenwasserstoffe und organische Silicium-Verbindungen verunreinigt ist, bei dem die Gebrauchtschwefelsäure
1. durch Zugabe von flüssigem Wasser und Einleiten von Wasserdampf auf eine Konzentration von höchstens 55 Gew.-% an Schwefelsäure verdünnt und auf höchstens 135°C zum Sieden erhitzt und
2. bei vermindertem Druck und bei einer Temperatur von mindestens 170°C auf mindestens 80 Gew.-% aufkonzentriert und danach mit einem Oxidationsmittel umgesetzt wird.

2. Verfahren gemäß Anspruch 1, **dadurch gekennzeichnet, dass** die Oxidation im zweiten Schritt bei 40 bis 90°C erfolgt.

3. Verfahren gemäß einem der Ansprüche 1 oder 2, **dadurch gekennzeichnet, dass** die Schwefelsäure im zweiten Schritt auf 85 bis 95 Gew.-% aufkonzentriert wird.

4. Verfahren gemäß einem der Ansprüche 1 bis 3, **dadurch gekennzeichnet, dass** höchstens ein zweifacher Überschuss bezogen auf den CSB an Oxidationsmittel eingesetzt wird.

5. Verfahren gemäß einem der Ansprüche 1 bis 4, **dadurch gekennzeichnet, dass** es sich bei dem Oxidationsmittel um Wasserstoffperoxid handelt.

6. Verfahren gemäß einem der Ansprüche 1 bis 5, **dadurch gekennzeichnet, dass** nur ein Teilstrom zwischen 10 und 50% der aufkonzentrierten Schwefelsäure der Oxidation unterzogen wird.

## Claims

1. Process for the regeneration of used sulfuric acid which is contaminated by secondary components from the group consisting of methylsulfuric acid, dimethyl ether, methanol, aliphatic and olefinic hydrocarbons, chlorinated hydrocarbons and organic silicon compounds, which comprises
1. by addition of liquid water and introduction of steam, diluting the used sulfuric acid to a concentration of at most 55% by weight of sulfuric acid and heating it to boiling at at most 135°C and
2. concentrating it to at least 80% by weight at reduced pressure and at a temperature of at least 170°C and thereafter reacting it with an oxidizing agent.

2. Process according to claim 1, **characterized in that** the oxidation in the second step proceeds at 40 to 90°C.

3. Process according to either claim 1 or 2, **characterized in that** the sulfuric acid is concentrated in the second step to 85 to 95% by weight.

4. Process according to one of claims 1 to 3, **characterized in that** use is made of at most a two-fold excess of oxidizing agent, based on the COD.

5. Process according to one of claims 1 to 4, **characterized in that** the oxidizing agent is hydrogen peroxide.

6. Process according to one of claims 1 to 5, **characterized in that** only a substream of between 10 and 50% of the concentrated sulfuric acid is subjected to the oxidation.

## Revendications

1. Procédé de régénération d'acide sulfurique usagé, qui est contaminé par des composants mineurs du groupe contenant l'acide méthylsulfurique, l'éther diméthylique, le méthanol, les hydrocarbures aliphatiques et oléfiniques, les hydrocarbures chlorés et les composés organiques de silicium, selon lequel l'acide sulfurique usagé
1. est dilué par ajout d'eau liquide et introduction de vapeur d'eau à une concentration d'au plus 55 % en poids en acide sulfurique et porté à ébullition à au plus 135 °C et
2. concentré à au moins 80 % en poids sous pression réduite et à une température d'au moins 170 °C, puis mis en réaction avec un agent d'oxydation.

2. Procédé selon la revendication 1, **caractérisé en ce que** l'oxydation dans la seconde étape a lieu de 40 à 90 °C.

3. Procédé selon l'une quelconque des revendications 1 ou 2, **caractérisé en ce que** l'acide sulfurique est concentré de 85 à 95 % en poids dans la seconde étape.

4. Procédé selon l'une quelconque des revendications 1 à 3, **caractérisé en ce qu'**un excès au plus d'un facteur de deux en agent d'oxydation est utilisé par rapport à la DCO.

5. Procédé selon l'une quelconque des revendications 1 à 4, **caractérisé en ce que** l'agent d'oxydation est du peroxyde d'hydrogène.

6. Procédé selon l'une quelconque des revendications 1 à 5, **caractérisé en ce qu'**uniquement un courant partiel compris entre 10 et 50 % de l'acide sulfurique concentré est soumis à l'oxydation.
